# EUROPÄISCHE PATENTSCHRIFT

(11) **EP 2 655 168 B1**
(45) Veröffentlichungstag und Bekanntmachung des Hinweises auf die Patenterteilung: **09.01.2019**
(21) Anmeldenummer: 11779588.0
(22) Anmeldetag: 05.11.2011
(51) Int. Cl.: B62D 27/02, B62D 29/00, F16B 5/06, F16B 11/00, F16B 2/24, F16B 21/07

(54) **VERFAHREN ZUM HERSTELLEN EINER KLEBVERBINDUNG ZWISCHEN MINDESTENS ZWEIER BAUTEILEN, INSBESONDERE KAROSSERIEBAUTEILE, MITHILFE VON FORMSCHLUSSELEMENTEN**
METHOD OF ASSEMBLING BY GLUING AT LEAST TWO PARTS, IN PARTICULAR VEHICLE BODY PARTS, USING FORM-FIT ELEMENTS
PROCÉDÉ DE LIAISON PAR COLLAGE D'AU MOINS DEUX PIÈCES, EN PARTICULIER DE CARROSSERIE, À L'AIDE D'ÉLÉMENTS DE FORME COMPLÉMENTAIRES

(30) Priorität: 21.12.2010 DE 102010063717
(43) Veröffentlichungstag der Anmeldung: 30.10.2013
(73) Patentinhaber: Bayerische Motoren Werke Aktiengesellschaft, 80809 München (DE)
(72) Erfinder: HERZINGER, Thomas, 80639 München (DE); VAN NIEKERK, Johann, 80993 München (DE)
(86) Internationale Anmeldenummer: PCT/EP2011/005578
(87) Internationale Veröffentlichungsnummer: WO 2012/084090

(56) Entgegenhaltungen:
- EP-B1- 1 855 869
- WO-A1-2011/134563
- DE-A1- 19 721 478
- DE-A1- 19 800 038
- JP-A- 2008 273 053
- US-A- 2 337 239
- US-A- 3 093 847

## Beschreibung

Die vorliegende Erfindung betrifft ein Verfahren zum Verbinden mindestens zweier Bauteile gemäß dem Oberbegriff des Patentanspruches 1.

Ein derartiges Verfahren ist aus der DE 197 21 478 A1 bekannt. Zum technischen Hintergrund der Erfindung zählen die JP 2008 273 053 A1, WO 2011/134 563 A1, US 2 337 239 A sowie die DE 198 00 038 A1 und die ältere, nachveröffentlichten deutsche Patentanmeldung DE 10 2010 028 323.1.

In der Großserienfertigung von Fahrzeugkarosserien ... werden eine Vielzahl einzelner Karosserieteile sowie Anbauteile, wie z. B. Halterungen etc. weitgehend vollautomatisiert zusammengebaut. Bei einem Fügevorgang werden zwei oder mehrere Karosserieteile zunächst mittels aufwendiger Spann- und Aufnahmetechnik relativ zueinander positioniert und anschließend miteinander verbunden, z. B. durch Verkleben und - aus Festigkeitsgründen - durch sich daran anschließendes Widerstandspunktschweißen. Als Nachteil des sich an das Verkleben anschließenden Widerstandspunktschweißens wird angesehen, dass der verwendete Klebstoff in der näheren Umgebung der Schweißpunkte verbrennt. Dadurch verringert sich insgesamt die Bauteilfestigkeit der Bauteilverbindung. Nachteilig ist ferner, dass die Bauteilverbindung im Bereich um die Schweißpunkte herum möglicherweise nicht mehr dicht ist, was Korrosionsprobleme nach sich ziehen kann.

Aufgabe der Erfindung ist es, ein Verfahren zum Verbinden mindestens zweier Bauteile zu schaffen, das sehr einfach und für Großserienfertigungen geeignet ist und teilweise oder ganz oder einen Verzicht auf Spanneinrichtungen ermöglicht.

Diese Aufgabe wird durch die Merkmale des Patentanspruches 1 gelöst. Vorteilhafte Ausgestaltungen und Weiterbildungen der Erfindung sind den Unteransprüchen zu entnehmen. Ausgangspunkt der Erfindung ist ein Verfahren zum Verbinden mindestens zweier Bauteile. Der Begriff "Bauteil" ist äußerst breit zu interpretieren. Er umfasst prinzipiell alle Arten von Bauteilen. Im Karosseriebaubereich sind beispielsweise Fahrzeugkarosserieteile sowie Anbauteile, Innenausstattungskomponenten etc. von dem Begriff "Bauteil" erfasst. Die Erfindung ist aber auf einer Vielzahl anderer Anwendungsgebiete einsetzbar, wie z.B. im Bereich sogenannter "weißer Ware" (Waschmaschinen, Trockner, Spülmaschinen etc.). Wenngleich die Erfindung in der nachfolgenden Beschreibung stellenweise im Zusammenhang mit dem Fahrzeugkarosseriebau erläutert wird, so ist dies keinesfalls einschränkend zu verstehen, sondern so, dass die Technologie auch in anderen Technolgiebereichen einsetzbar ist.

Gemäß der Erfindung wird zunächst ein erstes Bauteil bereitgestellt, an dem mindestens ein von dem ersten Bauteil abstehendes, erstes Formschlusselement vorgesehen ist. Bei dem ersten Formschlusselement kann es sich beispielsweise um ein von dem ersten Bauteil abstehendes "männliches Fixierelement" handeln. Das erste Formschlusselement kann ganz oder teilweise die Form einer Kugel bzw. Kalotte oder ganz oder teilweise eine kugelähnliche Form haben. Der Begriff "kugelähnlich" ist ebenfalls sehr breit zu interpretieren und nicht auf den mathematischen Begriff einer Kugelgeometrie beschränkt. Kugelähnlich kann z. B. "konvex gewölbt" bedeuten. Vorzugsweise ist das kugelförmige oder kugelähnlich gestaltete männliche Fixierelemente rotationssymmetrisch bezüglich einer Normalenrichtung eines oder beider Bauteile an der Stelle des ersten Formschlusselements. Die Begriffe "kugelartig" oder "kugelähnlich" umfassen ganz allgemein "runde" bzw. "gewölbte", insbesondere "konvex gewölbte Geometrien". Ein derart gestaltetes erstes Formschlusselement kann sehr einfach mit dem zweiten Bauteil "zusammengesteckt" werden. Durch eine runde, kantenlose Geometrie des ersten Formschlusselements minimiert sich die Gefahr, dass sich die beiden Bauteile beim Zusammenstecken ungewollt verkanten.

Zusätzlich zu dem ersten Bauteil wird ein zweites Bauteil bereitgestellt, das mindestens ein mit dem ersten Formschlusselement des ersten Bauteils zusammenwirkendes zweites Formschlusselement aufweist. Bei dem zweiten Formschlusselement kann es sich insbesondere um ein "weibliches Fixierelement" handeln. Der Begriff "weibliches Fixierelement" ist ebenfalls äußerst breit auszulegen. Gemeint sind konstruktive Gestaltungen, die es ermöglichen, das männliche Fixierelement in einer Einführrichtung in das weibliche Fixierelement einzuführen. In einem "ersten Montageschritt" werden die beiden Bauteile zunächst lösbar aneinander bzw. relativ zueinander vorfixiert und zwar durch Aneinandersetzen der beiden Bauteile, derart, dass die Formschlusselemente ineinandergreifen und die beiden Bauteile dadurch zumindest in einer Richtung relativ zueinander halten. Anschließend werden die beiden Bauteile dauerhaft miteinander verbunden und zwar mittels eines zwischen einander zugewandten Flächen der beiden Bauteile befindlichen Klebers.

Der Kleber kann vor dem lösbaren Verbinden der beiden Bauteile auf eines der beiden Bauteile oder auf beide Bauteile aufgebracht werden (oder, genauer gesagt auf einander zugewandte Flächen der beiden Bauteile). Alternativ dazu können die beiden Bauteile auch zunächst lösbar über die Formschlusselemente miteinander verbunden und erst danach Kleber zwischen die beiden Bauteile eingebracht werden.

Ein wesentlicher Vorteil der Erfindung besteht darin, dass die Bauteile bis zum Aushärten des Klebers nicht notwendigerweise durch Halte- bzw. Spanneinrichtungen relativ zueinander gehalten werden müssen, sondern es genügt, dass die beiden Bauteile durch die miteinander zusammenwirkenden Formschlusselemente lösbar relativ zueinander vorfixiert sind.

Ein Aushärten des Klebers kann beschleunigt werden, indem Wärme zugeführt wird. Beispielsweise kann vorgesehen sein, dass die beiden Bauteile in einen Ofen eingebracht werden oder dass der Kleberschicht in anderer Weise (z. B. induktiv, durch Mikrowellen, o.ä.) Wärme zugeführt wird.

Bei dem ersten Formschlusselement kann es sich um ein sich von dem ersten Bauteil unterscheidendes separates Teil handeln, das erst bei oder nach der Herstellung des ersten Bauteils mit dem ersten Bauteil verbunden wird. Das erste Formschlusselement kann mit dem ersten Bauteil stoffschlüssig verbunden werden, z. B. durch Aufschweißen des ersten Formschlusselements auf das erste Bauteil. Alternativ dazu kann das erste Formschlusselement auch durch andere Fügeverfahren, insbesondere durch kalte Fügeverfahren, wie z. B. Einpressen, Vernieten oder durch andere Fügeverfahren mit dem ersten Bauteil verbunden werden.

Nach einer Weiterbildung der Erfindung wird der Kleber im Bereich der Formschlusselemente appliziert und/oder so appliziert, dass er zumindest beim Aneinandersetzen bzw. Zusammendrücken der beiden Bauteile in den Bereich der Formschlusselemente fließt und zwar so, dass er unmittelbar bis an die Formschlusselemente heranreicht. Vorzugsweise wird der Kleber so appliziert, dass er sich um das erste Formschlusselement herum erstreckt. Der Kleber kann hierzu großflächig auf das erste und/oder auf das zweite Bauteil aufgebracht werden oder auch nur lokal im Bereich des ersten Formschlusselements.

Bei dem ersten Bauteil kann es sich insbesondere um ein Metallbauteil, wie z. B. um ein Stahlblech, ein Aluminiumblech o. ä. handeln. Bei dem zweiten Bauteil kann es sich ebenfalls um ein Metallblech, wie z. B. um ein Stahl- oder Aluminiumbauteil handeln oder aber auch um ein aus einem anderen Material, wie z. B. einem faserverstärkten Kunststoff hergestelltes Bauteil. In Betracht kommen insbesondere Kunststoffteile, die durch Glasfasern, Kohlefasern, feine Metalldrähte, Gewebe-Gewirk- oder ähnliche Strukturen in ihrer Steifigkeit verstärkt sind. Bei einem oder beiden Bauteilen kann es sich insbesondere um halbfertige (vorgeformte) oder fertige Karosseriebauteile handeln.

Nach einer Weiterbildung der Erfindung weist das männliche Fixierelement ein "Übermaß" in Bezug auf das weibliche Fixierelement auf. Das Übermaß kann insbesondere in einer Richtung, die quer zur Einführrichtung ist, bestehen. Aufgrund des Übermaßes werden die beiden Bauteile beim "Zusammenstecken" an den Fixierelementen lösbar aneinandergeklemmt und/oder in Einsteckrichtung zusammengeklemmt, was den Vorteil hat, dass auch die Kleberschicht zusammengedrückt wird und somit ohne weitere Spannwerkzeuge aushärten kann.

Die Bauteile können also, ähnlich wie dies von Steckbaukästen aus dem Spielwarenbereich bekannt ist, einfach zusammengesteckt und auf diese Weise relativ zueinander (vor-)fixiert werden. Bauteile, wie z. B. einzelne Karosseriebauteile können durch ein oder mehrere derartige Bauteilverbindungen miteinander verbunden, d. h. vor oder während des Zusammenklebens (vor-)montiert werden. Die einzelnen Bauteile brauchen dabei lediglich zusammengesteckt werden. Je nach Art der Bauteile und der konstruktiv vorgesehenen Klemmkraft können die beiden Bauteile ausschließlich über die erfindungsgemäße Bauteilverbindung (Klemmen und Kleben) miteinander verbunden sein oder zusätzlich über eine oder mehrere andere Verbindungstechniken, wie z. B. Schweißen, Schrauben, Nieten, Clinchen etc.

Ein Formschluss in Einführrichtung zwischen den Formschlusselementen kann vorgesehen sein. Ein derartiger Formschluss aber nicht notwendigerweise vorgesehen sein. Anders ausgedrückt muss nicht unbedingt ein "Hinterschnitt" des ersten (männlichen) und des zweiten "weiblichen" Formschlusselements vorgesehen sein.

Das zweite Formschlusselement kann durch ein in dem zweiten Bauteil vorgesehenes Durchgangsloch gebildet sein. Der Begriff "Durchgangsloch" ist breit zu interpretieren und nicht per so auf eine bestimmte Lochgeometrie beschränkt. Das Durchgangsloch kann z. B. kreisförmig sein oder eine von einer Kreisform abweichende Geometrie aufweisen, wie z. B. eine im wesentliche quadratische Geometrie, eine 3-, 4- oder mehreckförmige Geometrie, wobei die "Ecken" ausgerundet sein können.

Sofern das erste (männliche) Formschlusselement quer zur Einführrichtung ein gewisses Übermaß in Bezug auf das zweite (weibliche) Formschlusselement aufweist, müssen die beiden Formschlusselemente - oder zumindest eines der beiden Formschlusselemente - eine gewisse "Mindestelastizität" aufweisen, so dass das Zusammenstecken ermöglicht wird und nach dem Zusammenstecken eine hinreichende Klemmkraft bestehen bleibt.

Bei dem ersten Formschlusselement kann es sich z. B. um eine Kugel aus Vollmaterial handeln, insbesondere um eine Stahl- oder Aluminiumkugel. Eine derartige "Vollkugel" weist eine vergleichsweise geringe Elastizität auf. Die für ein Zusammenstecken erforderliche Mindestelastizität kann durch eine entsprechende Gestaltung des zweiten (weiblichen) Fixierelements erreicht werden.

Es kann vorgesehen sein, dass die beiden Bauteile nach dem Zusammenstecken an den Formschlusselementen in Richtungen, die quer zur Einführrichtung sind, spielfrei miteinander verbunden, d. h. unverschieblich relativ zueinander fixiert sind.

Wie bereits erwähnt, können die beiden Bauteile über mehrere derartige oder ähnliche Bauteilverbindungen relativ zueinander (vor-)fixiert werden. Dementsprechend kann an einem der beiden Bauteile mindestens ein weiteres erstes (männliches) Formschlusselement vorgesehen sein, das ebenfalls teilweise oder ganz die Form einer Kugel bzw. teilweise oder ganz eine kugelähnliche Form hat und das in einer bzw. in der selben Einführrichtung wie das andere erste (männliche) Fixierelement in ein zugeordnetes weiteres weibliches Formschluss- bzw. Fixierelement eingeführt werden kann bzw. eingeführt ist, das an dem betreffenden anderen Bauteil vorgesehen ist.

Das mindestens eine weitere zweite (weibliche) Formschlusselement kann durch einen Schlitz bzw. durch ein längliches Durchgangsloch gebildet sein, in dem das weitere erste (männliche) Fixierelement in einer Längsrichtung des Schlitzes bzw. des länglichen Durchgangslochs verschieblich ist.

Anschaulich gesprochen bildet eine derartige Bauteilverbindung ein "Festlager" und die mindestens eine weitere Bauteilverbindung ein "Loslager". Dies hat den Vorteil, dass die beiden miteinander zu verbindenden Bauteile "schwimmend" und somit im wesentlichen spannungsfrei zusammengesteckt bzw. ineinander fixiert werden können.

Nach einer Weiterbildung der Erfindung ist an einem Rand des das zweite (weibliche) Formschlusselement bildenden Durchgangslochs mindestens ein von dem zweiten Bauteil abstehendes, biegeelastisches Klemmelement vorgesehen. Das Klemmelement übt von außen her eine im wesentlichen quer zur Einführrichtung wirkende Klemmkraft auf eine Außenseite des ersten (männlichen) Formschlusselements aus. Das Klemmelement kann zungenartig ausgebildet sein und das erste (männliche) Formschlusselement hintergreifen. Dies muss aber nicht unbedingt der Fall sein. Im Falle eines Hinterschnitts kommt es beim Zusammenfügen, d. h. beim Zusammenstecken der beiden Formschlusselemente zu einem "Überdrücken" und somit zu einem hörbaren Einrasten des ersten (männlichen) Formschlusselements in das zweite bzw. an dem zweiten (weiblichen) Formschlusselement.

Bei dem Klemmelement kann es sich um einen sich entlang des gesamten Rands des Durchgangslochs erstreckenden Klemmkragen handeln. Alternativ dazu kann auch lediglich ein sich über einen Umfangsabschnitt erstreckendes zungenartiges Klemmkragenelement vorgesehen sein. Ferner können entlang des Durchgangslochs mehrere in Umfangsrichtung voneinander beabstandete zungenartige Klemmkrägen vorgesehen sein, die das erste (männliche) Formschlusselement jeweils auf einem Umfangsabschnitt oder jeweils an einer Umfangsstelle von außen her berühren. Es kann auch vorgesehen sein, dass lediglich ein Teil der vorgesehenen Klemmkrägen von außen her gegen das männliche Formschlusselement drückt.

Es kann vorgesehen sein, dass der Klemmkragen bzw. die Klemmkrägen in Einführrichtung oder entgegen der Einführrichtung von dem zweiten Bauteil absteht bzw. abstehen. Der mindestens eine Klemmkragen muss nicht ganz senkrecht in Bezug auf das zweite Bauteil umgebogen werden, sondern kann (leicht) schräg angestellt werden. Beispielsweise kann vorgesehen sein, dass der mindestens eine Klemmkragen mit der Oberfläche des zweiten Bauteils im Bereich des Durchgangslochs einen Winkel einschließt, der im Bereich zwischen 80° und 90° liegt.

Das das zweite (weibliche) Formschlusselement bildende Durchgangsloch kann aus dem zweiten Bauteil ausgestanzt sein. Bei dem Klemmkragen kann es sich um einen umgebogenen bzw. hochgestellten Abschnitt des ausgestanzten Durchgangslochs handeln.

Bei einem oder beiden der Bauteile kann es sich insbesondere um Tiefziehteile handeln. Das mindestens eine weibliche Formschlusselement, das z. B. durch ein Durchgangsloch gebildet sein kann, kann unmittelbar im Tiefziehwerkzeug ausgestanzt oder in einem nachfolgenden Fertigungsschritt hergestellt werden.

Im folgenden wird die Erfindung im Zusammenhang mit der Zeichnung näher erläutert. Es zeigen:
- Fig. 1: ein Blech mit einer aufgeschweißten Stahlkugel;
- Fig. 2, 3: ein Blech mit einem Durchgangsloch mit umlaufenden Klemmkrägen;
- Fig. 4 - 6: verschiedene Ausführungsbeispiele mit unterschiedlichen Klemmkrägen;
- Fig. 7: zwei schwimmend aneinander fixierte Bauteile gemäß der Erfindung;
- Fig. 8: einen Querschnitt durch eine gemäß der Erfindung hergestellte Bauteilverbindung.

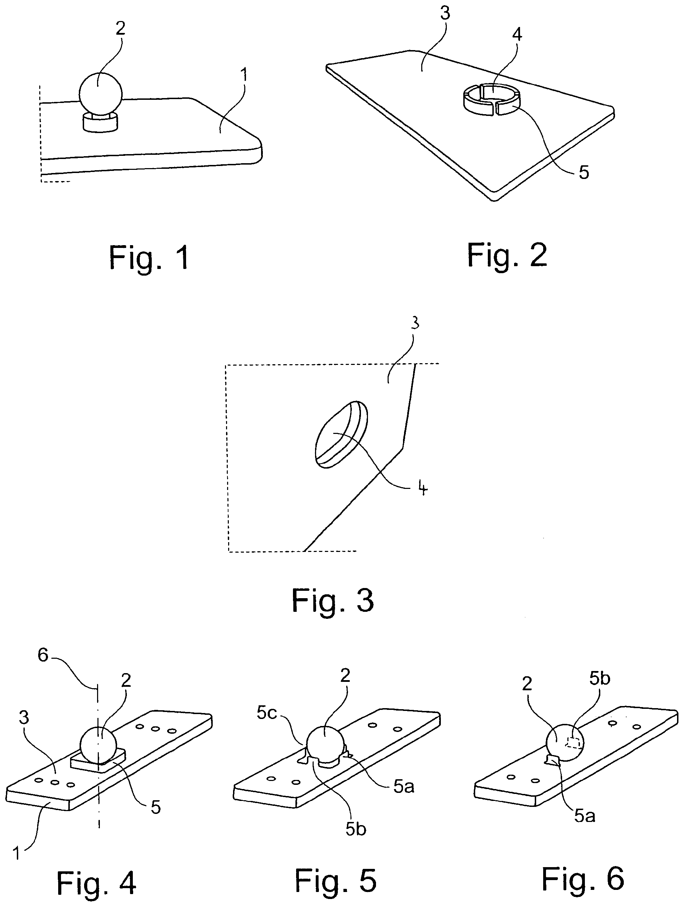

Figur 1 zeigt ein erstes Blech 1, auf das eine Stahlkugel 2 aufgeschweißt ist.

Die Figuren 2, 3 zeigen ein zweites Blech 3, in das ein Durchgangsloch 4 gestanzt ist, welches einen umgebogenen Kragen 5 aufweist, der als Klemmkragen fungiert. Das Durchgangsloch 4 bzw. der Klemmkragen 5 haben einen geringfügig kleineren Durchmesser als die Kugel 2. Der Klemmkragen ist jedoch hinreichend elastisch, so dass die Kugel in das Durchgangsloch 4 gesteckt werden kann.

Das Durchgangsloch 4 kann, wie in den Figuren 2, 3 gezeigt, eine annähernd viereckige bzw. quadratische Form haben. Im Falle einer annähernd quadratischen Druchgangslochgeometrie, drückt der Klemmkragen 5 punktförmig an vier jeweils ca. 90° voneinander beabstandeten Stellen von außen her gegen die Kugel 2.

Figur 4 zeigt die beiden Bleche 1, 3 in zusammengestecktem Zustand. Die an dem Blech 1 fixierte Kugel wurde von unten her durch das Durchgangsloch 4 hindurchgesteckt. Der Klemmkragen 5 drückt im Wesentlichen quer zu einer Einführrichtung 6 von außen her gegen die Kugel 2. Die beiden Bleche 1, 3 sind damit in Richtungen, die quer zur Einführvorrichtung 6 sind, fest und im Wesentlichen spielfrei relativ zueinander positioniert.

Figur 5 zeigt ein Ausführungsbeispiel, bei dem anstatt eines umlaufenden Klemmkragens in Umfangsrichtung gleichmäßig verteilt mehrere zahnartige Klemmkragenelemente 5a, 5b, 5c vorgesehen sind.

Beim Ausführungsbeispiel der Figur 6 sind lediglich zwei derartige zahnartige Klemmkragenelemente 5a, 5b vorgesehen, die in Umfangsrichtung ca. 180° voneinander beabstandet sind. Die beiden Klemmkragenelemente 5a, 5b sind auf einander gegenüberliegenden Seiten der Kugel 2 angeordnet.

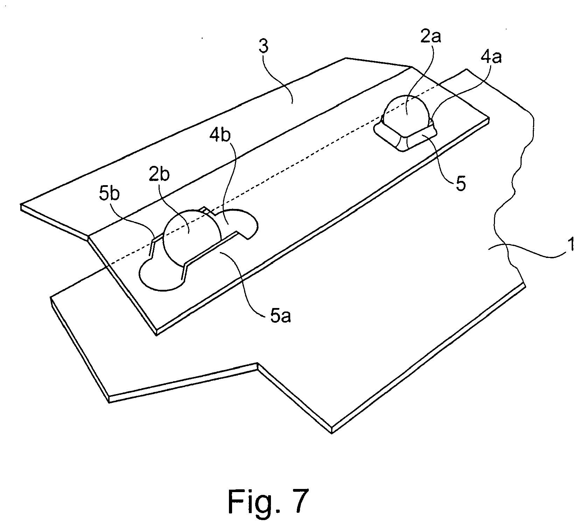

Figur 7 zeigt ein Ausführungsbeispiel, bei dem auf einem ersten Blech 1 beabstandet voneinander eine erste Kugel 2a und eine zweite Kugel 2b angeordnet sind. Die beiden Kugeln 2a, 2b können auf das Blech 1 aufgeschweißt sein.

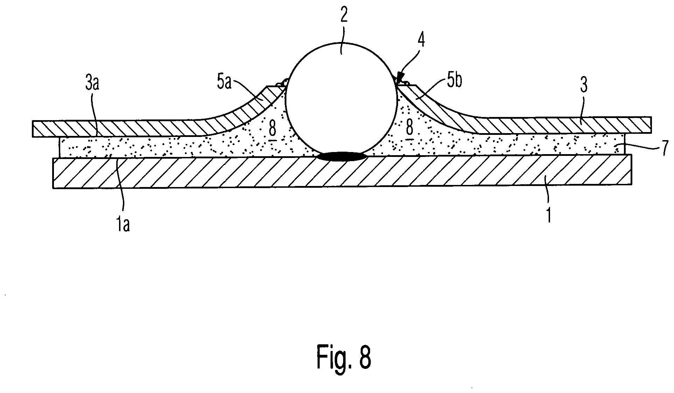

Figur 8 zeigt einen Querschnitt durch eine gemäß der Erfindung hergestellte Bauteilverbindung. Zwischen einander zugewandte Flächen 1a, 3a der beiden Bauteile 1, 3 ist eine Kleberschicht eingebracht. Bei der Kleberschicht kann es sich beispielsweise um einen flüssigen, aushärtbaren Ein- oder Mehrkomponentenkleber handeln.

Wie aus Fig. 8 ersichtlich ist, wird der Kleber 7 so appliziert, dass er beim Aneinandersetzen bzw. Zusammendrücken der beiden Bauteile 1, 3 in einen Hinterschnittbereich 8 fließt, der durch die auf das Bauteil 1 aufgeschweißte Kugel 2 und die an deren Außenumfang anliegende Klemmkrägen 5a, 5b gebildet ist.

Somit trägt die Kugel 2 durch Klebstoff, der in das "Kragenloch" (Kragenloch 4) fließt zur Gesamtfestigkeit der Bauteilverbindung bei. Untersuchungen haben gezeigt, dass eine derart "eingeklebte Kugel" 2 eine Festigkeit hat, die mit der eines Widerstandsschweißpunkts vergleichbar ist. Da die Kugel 2 vor dem Auftragen bzw. Aufbringen des Klebstoffs auf das Blech 1 aufgeschweißt wird, tritt das beim nachträglichen Verschweißen miteinander verklebter Bauteile auftretende Problem des Abbrennens von Klebstoff um die Schweißstelle herum nicht auf. Wie aus Fig. 8 ersichtlich ist, füllt der Klebstoff 7 den gesamten Hinterschnitt 8 aus, d. h. er reicht unmittelbar bis an die Kugel 2 heran, was eine optimale Festigkeit ergibt.

Während miteinander zu verklebende Bauteile bislang, solang der Kleber noch nicht ausgehärtet war, durch Spannelemente o. ä. relativ zueinander fixiert werden mussten, kann bei einer Bauteilverbindung, wie sie z. B. in Fig. 8 dargestellt ist, auf derartige Spannelemente verzichtet werden, da dort die beiden Bauteile 1, 3 unmittelbar durch die miteinander zusammenwirkenden Formschlusselemente, d. h. durch die Kugel 2 und das Durchgangsloch 4 aneinandergeklemmt werden.

Bei einer Bauteilverbindung, wie sie in Fig. 7 dargestellt ist, die ein "Festlager" und ein "Loslager" aufweist, können sich die beiden Bauteile 1, 3 relativ zueinander in Längsrichtung des Langlochs 4b verschieben, wodurch Materialwölbungen und somit eine Beschädigung der Kleberschicht (nicht dargestellt) vermieden wird.

## Patentansprüche

1. Verfahren, insbesondere Karosseriebauverfahren, zum Verbinden mindestens zweier Bauteile (1, 3), insbesondere zweier fest miteinander zu verbindender Karosserieteile einer Fahrzeugkarosserie, mit folgenden Schritten:
- Bereitstellen eines ersten Bauteils (1), an dem mindestens ein von dem ersten Bauteil (1) abstehendes erstes Formschlusselement (2) vorgesehen ist,
- Bereitstellen eines zweiten Bauteils (3), das mindestens ein mit dem ersten Formschlusselement (2) des ersten Bauteils (1) zusammenwirkendes zweites Formschlusselement (4, 5) aufweist,
- Lösbares Fixieren der beiden Bauteile (1, 3) durch Aneinandersetzen derselben, derart, dass die Formschlusselemente (2, 4, 5) ineinandergreifen oder einander hintergreifen und die Bauteile (1, 3) dadurch zumindest in einer Richtung relativ zueinander halten,
- dauerhaftes Verbinden der beiden Bauteile (1, 3) mittels eines zwischen einander zugewandten Flächen (1a, 3a) der beiden Bauteile (1, 3) befindlichen oder eingebrachten Klebers (7), wobei
- es sich bei dem ersten Formschlusselement (2) um ein männliches Fixierelement handelt,
- der Kleber (7) im Bereich der Formschlusselemente (2, 4, 5) appliziert wird und/oder so appliziert wird, dass er beim Aneinandersetzen der beiden Bauteile (1, 3) in den Bereich (8) der Formschlusselemente (2, 4, 5) fließt,
**dadurch gekennzeichnet, dass**
- als erstes Formschlusselement (2) ein Formschlusselement verwendet wird, das teilweise oder ganz die Form einer Kugel (2),
- sich das erste Formschlusselement (2) zumindest in einem Bereich in Richtung des ersten Bauteils (1) hin verjüngt und
- das erste Formschlusselement (2) in dem lösbar vorfixierten Zustand der beiden Bauteile (1, 3) zumindest einen Bereich (5a, 5b) des zweiten Formschlusselements (4, 5) formschlüssig hintergreift.

2. Verfahren nach Anspruch 1, **dadurch gekennzeichnet, dass** der Kleber (7) durch Zuführen von Wärme, insbesondere mittels eines Ofens, ausgehärtet wird.

3. Verfahren nach Anspruch 1 oder 2, **dadurch gekennzeichnet, dass** das erste Formschlusselement (2) ein sich von dem ersten Bauteil (1) unterscheidendes, separates Teil ist, das bei oder erst nach der Herstellung des ersten Bauteils (1) mit dem ersten Bauteil (1) verbunden wird.

4. Verfahren nach einem der Ansprüche 1 bis 3, **dadurch gekennzeichnet, dass** der Kleber (7) so appliziert wird, dass er sich um das erste Formschlusselemente (2) herum erstreckt.

5. Verfahren nach einem der Ansprüche 1 bis 4, **dadurch gekennzeichnet, dass** das erste Formschlusselement (2) ganz oder teilweise rotationssymmetrisch bezüglich der Oberflächennormalen (6) des ersten Bauteils (1) am Befestigungspunkt des ersten Formschlusselements (2) ist.

6. Verfahren nach einem der Ansprüche 1 bis 5, **dadurch gekennzeichnet, dass** das erste Formschlusselement (2) mit dem ersten Bauteil (1) stoffschlüssig verbunden wird.

7. Verfahren nach einem der Ansprüche 1 bis 6, **dadurch gekennzeichnet, dass** das erste Bauteil ein Blechbauteil aus Metall ist.

8. Verfahren nach Anspruch 7, **dadurch gekennzeichnet, dass** das erste Formschlusselement (2) ebenfalls aus Metall besteht.

9. Verfahren nach einem der Ansprüche 1 bis 8, **dadurch gekennzeichnet, dass** das mindestens eine erste Formschlusselement (2) auf das erste Bauteil (1) aufgeschweißt wird.

10. Verfahren nach einem der Ansprüche 1 bis 9, **dadurch gekennzeichnet, dass** das zweite Bauteil (3) ein zur Aufnahme des ersten Formschlusselements (2) vorgesehenes weibliches Fixierelement (4, 5) aufweist, wobei das erste Formschlusselement (2) beim Aneinandersetzen der beiden Bauteile (1, 3) in einer Einführrichtung (6) in das weibliche Fixierelement (4, 5) eingeführt wird.

11. Verfahren nach einem der Ansprüche 1 bis 10, **dadurch gekennzeichnet, dass** das mindestens eine zweite Formschlusselement durch eine in dem zweiten Bauteil (3) vorgesehene Ausnehmung (4) gebildet ist.

12. Verfahren nach Anspruch 11, **dadurch gekennzeichnet, dass** die Ausnehmung (4) schlitzartig gestaltet ist, insbesondere in der Form eines Schlüssellochs.

13. Verfahren nach einem der Ansprüche 1 bis 12, **dadurch gekennzeichnet, dass** der Kleber (7) so appliziert wird, dass er nach dem Aneinandersetzen der beiden Bauteile (1, 3) einen durch das erste Formschlusselement (2) und das zweite Formschlusselement (4, 5) gebildeten Hinterschnittbereich (8) ausfüllt.

14. Verfahren nach einem der Ansprüche 1 bis 13, **dadurch gekennzeichnet, dass** das erste Formschlusselement (2) im wesentlichen quer zur Einführrichtung (6) ein Übermaß in Bezug auf das zweite Formschlusselement (4, 5) aufweist, so dass die beiden Bauteile (1, 3) an den Formschlusselementen (2, 4, 5) aneinander geklemmt werden.

15. Verfahren nach einem der Ansprüche 1 bis 14, **dadurch gekennzeichnet, dass** das zweite Formschlusselement durch ein in dem zweiten Bauteil (3) vorgesehenes Durchgangsloch (4) gebildet ist.

16. Verfahren nach Anspruch 15, **dadurch gekennzeichnet, dass** das Durchgangsloch (4) eine von einer Kreisform abweichende Form hat.

17. Verfahren nach Anspruch 15 oder 16, **dadurch gekennzeichnet, dass** die Form des Durchgangslochs (4) einem Quadrat oder einem Dreieck ähnelt.

18. Verfahren nach einem der Ansprüche 10 bis 17, **dadurch gekennzeichnet, dass** die beiden Bauteile (1, 3) im Bereich der beiden Fixierelemente (2, 4, 5) in Richtungen quer zur Einführrichtung (6) unverschieblich relativ zueinander fixiert sind.

19. Verfahren nach einem der Ansprüche 1 bis 18, **dadurch gekennzeichnet, dass** ein weiteres erstes Formschlusselement (2b) vorgesehen ist, das teilweise oder ganz die Form einer Kugel hat und das in einer bzw. in derselben Einführrichtung (6) in ein zugeordnetes weiteres zweites Formschlusselement (4b) eingeführt wird.

20. Verfahren nach Anspruch 19, **dadurch gekennzeichnet, dass** das weitere zweite Formschlusselement (4b) durch einen Schlitz bzw. durch ein längliches Durchgangsloch gebildet ist, in dem das weitere erste Formschlusselement (2b) in einer Längsrichtung des Schlitzes bzw. des länglichen Durchgangslochs verschiebbar ist.

21. Verfahren nach einem der Ansprüche 15 bis 20, **dadurch gekennzeichnet, dass** an einem Rand des Durchgangslochs (4, 4a, 4b) mindestens ein von dem zweiten Bauteil (3) abstehendes biegeelastisches Klemmelement (5, 5a, 5b, 5c) vorgesehen ist, das von außen her eine im wesentlichen quer zur Einführrichtung (6) wirkende Klemmkraft auf eine Außenseite des ersten Formschlusselements (2, 2a, 2b) ausübt.

22. Verfahren nach Anspruch 21, **dadurch gekennzeichnet, dass** das Klemmelement (5, 5a, 5b, 5c) das erste Formschlusselement (2, 2a, 2b) hintergreift.

23. Verfahren nach einem der Ansprüche 21 oder 22, **dadurch gekennzeichnet, dass** es sich bei dem Klemmelement (5) um einen sich entlang des gesamten Rands des Durchgangslochs (4) erstreckenden Klemmkragen (5) handelt.

24. Verfahren nach einem der Ansprüche 15 bis 23, **dadurch gekennzeichnet, dass** entlang des Rands des Durchgangslochs (4) mehrere in Umfangsrichtung voneinander beabstandete Klemmkrägen (5a, 5b, 5c) vorgesehen sind, die auf einem Umfangsabschnitt das erste Formschlusselement (2, 2a, 2b) von außen her berühren.

25. Verfahren nach Anspruch 24, **dadurch gekennzeichnet, dass** der Klemmkragen bzw. die Klemmkrägen (5, 5a, 5b, 5c) in Einführrichtung (6) oder entgegen der Einführrichtung (6) von dem zweiten Bauteil (3) absteht bzw. abstehen.

26. Verfahren nach einem der vorangehenden Ansprüche, **dadurch gekennzeichnet, dass** es sich bei dem ersten und/oder bei dem zweiten Bauteil (1, 3) um ein Blechbauteil, insbesondere um ein Stahl- oder Aluminiumblechbauteil handelt.

27. Verfahren nach einem der vorangehenden Ansprüche, **dadurch gekennzeichnet, dass** es sich bei einem der beiden Bauteile (1, 3) um ein faserverstärktes Kunststoffbauteil handelt.

28. Verfahren nach einem der vorangehenden Ansprüche, **dadurch gekennzeichnet, dass** es sich bei dem ersten und/oder bei dem zweiten Fahrzeugbauteil um ein Karosseriebauteil handelt.

29. Verfahren nach einem der Ansprüche 15 bis 28, **dadurch gekennzeichnet, dass** das Durchgangsloch (4, 4a, 4b) aus dem zweiten Bauteil (3) ausgestanzt wird.

30. Verfahren nach einem der Ansprüche 24 bis 29, **dadurch gekennzeichnet, dass** es sich bei dem mindestens einem Klemmkragen (5, 5a, 5b, 5c) um einen umgebogenen Abschnitt des zweiten Bauteils (3) handelt.

31. Verfahren nach einem der vorangehenden Ansprüche, **dadurch gekennzeichnet, dass** es sich bei dem ersten Formschlusselement um ein vollständig aus Metall, insbesondere aus Stahl oder Aluminium, bestehendes Element handelt.

32. Verfahren nach einem der vorangehenden Ansprüche, **dadurch gekennzeichnet, dass** die beiden Bauteile (1, 3) zusätzlich zu der lösbaren Klemmverbindung und der Klebeverbindung über eine weitere Verbindung, insbesondere über eine Schweißverbindung, unmittelbar fest miteinander verbunden sind.

## Claims

1. A method, especially vehicle body manufacturing method, for connecting at least two components (1, 3), especially two vehicle body parts of a vehicle body which are to be connected securely together, having the following steps:
- providing a first component (1), on which at least one first form-fitting element (2) which protrudes from the first component (1) is provided,
- providing a second component (3) which has at least one second form-fitting element (4, 5) which cooperates with the first form-fitting element (2) of the first component (1),
- detachably fixing the two components (1, 3) by placing them together, such that the form-fitting elements (2, 4, 5) engage in one another or engage behind one another and thereby hold the components (1, 3) at least in one direction relative to each other,
- permanently connecting the two components (1, 3) by means of an adhesive (7) located or introduced between opposing faces (1a, 3a) of the two components (1, 3), wherein
- the first form-fitting element (2) is a male fixing element,
- the adhesive (7) is applied in the region of the form-fitting elements (2, 4, 5) and/or is applied such that when the two components (1, 3) are placed together it flows into the region (8) of the form-fitting elements (2, 4, 5),
**characterised in that**
- a form-fitting element which is partially or entirely in the form of a sphere (2) is used as the first form-fitting element (2),
- the first form-fitting element (2) tapers at least in one region in the direction of the first component (1), and
- the first form-fitting element (2) in the detachably pre-fixed state of the two components (1, 3) engages in form-fitting manner behind at least one region (5a, 5b) of the second form-fitting element (4, 5).

2. A method according to Claim 1, **characterised in that** the adhesive (7) is cured by supplying heat, especially by means of an oven.

3. A method according to Claim 1 or Claim 2, **characterised in that** the first form-fitting element (2) is a separate part which is distinct from the first component (1), which part is connected to the first component (1) upon or only after the production of the first component (1).

4. A method according to one of Claims 1 to 3, **characterised in that** the adhesive (7) is applied such that it extends around the first form-fitting elements (2).

5. A method according to one of Claims 1 to 4, **characterised in that** the first form-fitting element (2) is entirely or partially rotationally symmetrical with respect to the surface normals (6) of the first component (1) at the fastening point of the first form-fitting element (2).

6. A method according to one of Claims 1 to 5, **characterised in that** the first form-fitting element (2) is connected to the first component (1) by a material-formed bond.

7. A method according to one of Claims 1 to 6, **characterised in that** the first component is a sheet component made of metal.

8. A method according to Claim 7, **characterised in that** the first form-fitting element (2) likewise consists of metal.

9. A method according to one of Claims 1 to 8, **characterised in that** the at least one first form-fitting element (2) is welded onto the first component (1).

10. A method according to one of Claims 1 to 9, **characterised in that** the second component (3) has a female fixing element (4, 5) provided for receiving the first form-fitting element (2), the first form-fitting element (2) when the two components (1, 3) are placed together being introduced into the female fixing element (4, 5) in a direction of introduction (6).

11. A method according to one of Claims 1 to 10, **characterised in that** the at least one second form-fitting element is formed by a cutout (4) provided in the second component (3).

12. A method according to Claim 11, **characterised in that** the cutout (4) is of slot-like configuration, especially in the form of a keyhole.

13. A method according to one of Claims 1 to 12, **characterised in that** the adhesive (7) is applied such that once the two components (1, 3) have been placed together it fills an undercut region (8) formed by the first form-fitting element (2) and the second form-fitting element (4, 5).

14. A method according to one of Claims 1 to 13, **characterised in that** the first form-fitting element (2) has substantially transversely to the direction of introduction (6) an oversize relative to the second form-fitting element (4, 5), so that the two components (1, 3) are clamped against each other at the form-fitting elements (2, 4, 5).

15. A method according to one of Claims 1 to 14, **characterised in that** the second form-fitting element is formed by a through-hole (4) provided in the second component (3).

16. A method according to Claim 15, **characterised in that** the through-hole (4) has a form which deviates from a circular form.

17. A method according to Claim 15 or Claim 16, **characterised in that** the form of the through-hole (4) is similar to a square or a triangle.

18. A method according to one of Claims 10 to 17, **characterised in that** the two components (1, 3) in the region of the two fixing elements (2, 4, 5) are fixed so as to be non-displaceable relative to each other in directions transversely to the direction of introduction (6).

19. A method according to one of Claims 1 to 18, **characterised in that** a further first form-fitting element (2b) is provided which has partially or entirely the form of a sphere and which is introduced in a or in the same direction of introduction (6) into an associated further second form-fitting element (4b).

20. A method according to Claim 19, **characterised in that** the further second form-fitting element (4b) is formed by a slot or by an elongate through-hole in which the further first form-fitting element (2b) is displaceable in a longitudinal direction of the slot or of the elongate through-hole.

21. A method according to one of Claims 15 to 20, **characterised in that** at least one flexurally elastic clamping element (5, 5a, 5b, 5c) protruding from the second component (3) is provided on an edge of the through-hole (4, 4a, 4b), which element from the outside exerts a clamping force acting substantially transversely to the direction of introduction (6) on an outer side of the first form-fitting element (2, 2a, 2b).

22. A method according to Claim 21, **characterised in that** the clamping element (5, 5a, 5b, 5c) engages behind the first form-fitting element (2, 2a, 2b).

23. A method according to one of Claims 21 or 22, **characterised in that** the clamping element (5) is a clamping collar (5) which extends along the entire edge of the through-hole (4).

24. A method according to one of Claims 15 to 23, **characterised in that** a plurality of clamping collars (5a, 5b, 5c) spaced apart from each other in the peripheral direction are provided along the edge of the through-hole (4), which collars on a peripheral portion contact the first form-fitting element (2, 2a, 2b) from the outside.

25. A method according to Claim 24, **characterised in that** the clamping collar or the clamping collars (5, 5a, 5b, 5c) protrudes or protrude from the second component (3) in the direction of introduction (6) or counter to the direction of introduction (6).

26. A method according to one of the preceding claims, **characterised in that** the first and/or the second component (1, 3) is a sheet-metal component, especially a steel or aluminium sheet-metal component.

27. A method according to one of the preceding claims, **characterised in that** one of the two components (1, 3) is a fibre-reinforced plastics-material component.

28. A method according to one of the preceding claims, **characterised in that** the first and/or the second vehicle component is a vehicle body component.

29. A method according to one of Claims 15 to 28, **characterised in that** the through-hole (4, 4a, 4b) is punched out from the second component (3).

30. A method according to one of Claims 24 to 29, **characterised in that** the at least one clamping collar (5, 5a, 5b, 5c) is a bent-over portion of the second component (3).

31. A method according to one of the preceding claims, **characterised in that** the first form-fitting element is an element consisting completely of metal, especially of steel or aluminium.

32. A method according to one of the preceding claims, **characterised in that** the two components (1, 3) are connected directly securely together by means of a further connection, especially by means of a welded connection, in addition to the detachable clamping connection and the adhesive connection.

## Revendications

1. Procédé notamment, procédé de construction de carrosserie pour relier au moins deux pièces (1, 3) notamment deux pièces à relier solidairement l'une à l'autre d'une carrosserie de véhicule selon les étapes suivantes, consistant à :
- fournir une première pièce (1) munie d'au moins un premier élément liaison par la forme (2) en saillie de la première pièce (1),
- fournir une seconde pièce (3) ayant au moins un second élément liaison par la forme (4, 5) coopérant avec le premier élément liaison par la forme (2) de la première pièce (1),
- fixer de manière amovible les deux pièces (1, 3) par assemblage de celles-ci de façon que les éléments de liaison par la forme (2, 4, 5) s'interpénètrent ou s'accrochent l'une derrière l'autre et que les pièces (1, 3) tiennent l'une par rapport à l'autre au moins dans une direction,
- relier de manière permanente les deux pièces (1, 3) à l'aide d'un adhésif (7) présent entre les surfaces en regard (1a, 3a) les deux pièces (1, 3) ou introduit entre les surfaces,
- dans lequel,
* le premier élément de liaison par la forme (2) est une pièce de fixation mâle,
* l'adhésif (7) est appliqué dans la région de l'élément de liaison par la forme (2, 4, 5) et/ou sera appliqué de façon à fluer lors de l'assemblage des deux pièces (1, 3) dans la région (8) des éléments de liaison par la forme (2, 4, 5),
**caractérisé en ce que**
le premier élément de liaison par la forme (2) est un élément de liaison par la forme qui a en partie ou en totalité la forme d'une bille (2),
- le premier élément de liaison par la forme (2) va en diminuant au moins dans une région en direction de la première pièce (1) et,
- le premier élément de liaison par la forme (2) lorsque les deux pièces (1, 3) sont dans leur état de préfixation amovible, vient prendre par une liaison par la forme derrière au moins une région (5a, 5b) du second élément de liaison par la forme (4, 5).

2. Procédé selon la revendication 1,
caractérisé en qu'
on durcit l'adhésif (7) par apport de chaleur notamment à l'aide d'un four.

3. Procédé selon la revendication 1 ou 2,
**caractérisé en ce que**
le premier élément de liaison par la forme (2) est une pièce séparée, distincte de la première pièce (1) et qui ne sera relié à la première pièce (1) que lors de la fabrication de celle-ci ou après sa fabrication.

4. Procédé selon l'une quelconque des revendications 1 à 3,
**caractérisé en ce qu'**
on applique l'adhésif (7) pour qu'il entoure le premier élément liaison par la forme (2).

5. Procédé selon l'une quelconque des revendications 1 à 4,
**caractérisé en ce que**
le premier élément de liaison par la forme (2) a une symétrie de rotation totale ou partielle par rapport à la normale (6) à la surface de la première pièce (1) au point de fixation du premier élément de liaison par la forme (2).

6. Procédé selon l'une quelconque des revendications 1 à 5,
**caractérisé en ce que**
le premier élément de liaison par la forme (2) est relié à la première pièce (1) par une liaison par la matière

7. Procédé selon l'une quelconque des revendications 1 à 6,
**caractérisé en ce que**
la première pièce est une pièce métallique en tôle.

8. Procédé selon la revendication 7,
**caractérisé en ce que**
l'élément de liaison par la forme (2) est également en métal.

9. Procédé selon l'une quelconque des revendications 1 à 8,
caractérisé qu'
au moins un premier élément de liaison par la forme (2) est soudé sur la première pièce (1).

10. Procédé selon l'une quelconque des revendications 1 à 9,
caractérisé en que
la seconde pièce (3) comporte un élément de fixation femelle (4, 5) pour recevoir le premier élément de liaison par la forme (2), ce premier élément de liaison par le forme (2) étant engagé selon la direction d'introduction (6) dans la pièce de fixation femelle (4, 5) lors de l'assemblage des deux pièces (1, 3).

11. Procédé selon l'une quelconque des revendications 1 à 10,
caractérisé qu'
au moins un second élément de liaison par la forme est constitué par un évidement (4) dans la seconde pièce (3).

12. Procédé selon la revendication 11,
**caractérisé en ce que**
l'évidement (4) est en forme de fente notamment en forme de trou serrure.

13. Procédé selon l'une quelconque des revendications 1 à 12,
**caractérisé en ce qu'**
on applique l'adhésif (7) pour qu'après l'assemblage des deux pièces (1, 3) il remplisse la zone en contre-dépouille (8) formée par le premier élément de liaison par la forme (2) et le second élément de liaison par la forme (4, 5).

14. Procédé selon l'une quelconque des revendications 1 à 13,
**caractérisé en ce que**
le premier élément liaison par la forme (2) a un surdimensionnement par rapport au second élément de liaison par la forme (4, 5) pratiquement dans la direction transversale à la direction d'introduction (6) de façon que les deux pièces (1, 3) soient serrées l'une contre l'autre sur les éléments de liaison par la forme (2, 4, 5).

15. Procédé selon l'une quelconque des revendications 1 à 14,
**caractérisé en ce que**
le second élément de liaison par la forme est un orifice traversant (4) réalisé dans la seconde pièce (3).

16. Procédé selon la revendication 15,
**caractérisé en ce que**
l'orifice traversant (4) a une forme non circulaire.

17. Procédé selon l'une quelconque des revendications 15 à 16,
caractérisé que
la forme de l'orifice traversant (4) est voisine de celle d'un carré ou d'un triangle.

18. Procédé selon l'une quelconque des revendications 10 à 17,
**caractérisé en ce que**
dans la région des deux éléments de fixation (2, 4, 5), les deux pièces (1, 3) sont fixées de manière bloquées l'une par rapport à l'autre dans des directions transversales à la direction d'introduction (6).

19. Procédé selon l'une quelconque des revendications 1 à 18,
**caractérisé par**
un autre premier élément de liaison par la forme (2b) qui a en partie ou en totalité la forme d'une bille et cet élément est introduit dans une direction d'introduction ou dans la même direction d'introduction (6) dans un autre second élément de liaison par la forme (4b), associé.

20. Procédé selon la revendication 19,
**caractérisé en ce que**
l'autre second élément de liaison par la forme (4b) est une fente ou un orifice traversant allongé dans lequel l'autre premier élément de liaison par la forme (2b) peut coulisser dans la direction longitudinale de la fente ou du trou traversant, allongé.

21. Procédé selon l'une quelconque des revendications 15 à 20,
caractérisé qu'
un bord de l'orifice traversant (4, 4a, 4b) a au moins un élément de serrage (5, 5a, 5b, 5c) élastique en flexion en saillie de la seconde pièce (3), et qui exerce de l'extérieur une force de serrage orientée pratiquement transversalement à la direction d'introduction (6) sur le côté extérieur du premier élément de liaison par la forme (2, 2a, 2b).

22. Procédé selon la revendication 21,
**caractérisé en ce que**
l'élément de serrage (5, 5a, 5b, 5c) vient prendre derrière le premier élément de liaison par la forme (2, 2a, 2b).

23. Procédé selon l'une quelconque des revendications 21 à 22,
**caractérisé en ce que**
l'élément de serrage (5) est une collerette de serrage (5) qui s'étend le long de tout le bord de l'orifice traversant (4).

24. Procédé selon l'une quelconque des revendications 15 à 23,
**caractérisé en ce que**
le long du bord de l'orifice traversant (4) plusieurs collerettes de serrage (5a, 5b, 5c) écartées des unes des autres dans la direction périphérique, sont en contact de l'extérieur, sur un segment périphérique avec le premier élément de liaison par la forme (2, 2a, 2b).

25. Procédé selon la revendication 24,
**caractérisé en ce que**
la ou les collerettes de serrage (5, 5a, 5b, 5c) sont en saillies dans la direction d'introduction (6) ou dans la direction opposée à la direction d'introduction (6) par rapport à la seconde pièce (3).

26. Procédé selon l'une quelconque des revendications précédentes,
**caractérisé en ce que**
la première et/ou la seconde pièce (1, 3) sont une pièce en tôle notamment une pièce en tôle en acier ou d'aluminium.

27. Procédé selon l'une quelconque des revendications précédentes,
**caractérisé en ce que**
l'une des deux pièces (1, 3) est une pièce en matière plastique composite renforcée par des fibres de verre.

28. Procédé selon l'une quelconque des revendications précédentes,
**caractérisé en ce que**
la première et/ou la seconde pièce de véhicule est une pièce de carrosserie.

29. Procédé selon l'une quelconque des revendications 15 à 28,
**caractérisé en ce que**
l'orifice traversant (4, 4a, 4b) est découpé par estampage dans la seconde pièce (3).

30. Procédé selon l'une quelconque des revendications 24 à 29,
**caractérisé en ce qu'**
au moins une des collerettes de serrage (5, 5a, 5b, 5c) est un segment recourbé de la seconde pièce (3).

31. Procédé selon l'une quelconque des revendications précédentes,
**caractérisé en ce que**
le premier élément liaison par la forme est un élément complètement en métal, notamment en acier ou en aluminium.

32. Procédé selon l'une quelconque des revendications précédentes,
**caractérisé en ce que**
les deux pièces (1, 3) en plus de leur liaison par serrage amovible et de leur liaison par collage, sont reliées solidairement, directement l'une à l'autre par une autre liaison notamment par une soudure.
